**Europäisches Patentamt**

**European Patent Office**

**Office européen des brevets**

(19)

(11) Numéro de publication: **0 089 298**
**B1**

(12) # FASCICULE DE BREVET EUROPEEN

(45) Date de publication du fascicule du brevet:
**27.08.86**

(51) Int. Cl.⁴: **F 16 B 13/06**

(21) Numéro de dépôt: **83420037.0**

(22) Date de dépôt: **09.03.83**

(54) Chevilles à douilles expansibles.

(30) Priorité: **10.03.82 FR 8204289**

(43) Date de publication de la demande:
**21.09.83 Bulletin 83/38**

(45) Mention de la délivrance du brevet:
**27.08.86 Bulletin 86/35**

(84) Etats contractants désignés:
**AT BE CH DE GB IT LI LU NL SE**

(56) Documents cités:
**DE - A - 1 810 295**
**DE - A - 2 155 054**
**DE - A - 2 641 442**
**DE - A - 2 904 988**
**FR - A - 1 574 952**

(73) Titulaire: **Bucz, Jean, Les Billets, F-74340 Samoens (FR)**

(72) Inventeur: **Bucz, Jean, Les Billets, F-74340 Samoens (FR)**

(74) Mandataire: **Schmitt, John, Cabinet John Schmitt 9, rue Pizay, F-69001 Lyon (FR)**

ACTORUM AG

## Description

La présente invention concerne les chevilles à douilles expansibles permettant de fixer des objets à des parois en matériaux durs.

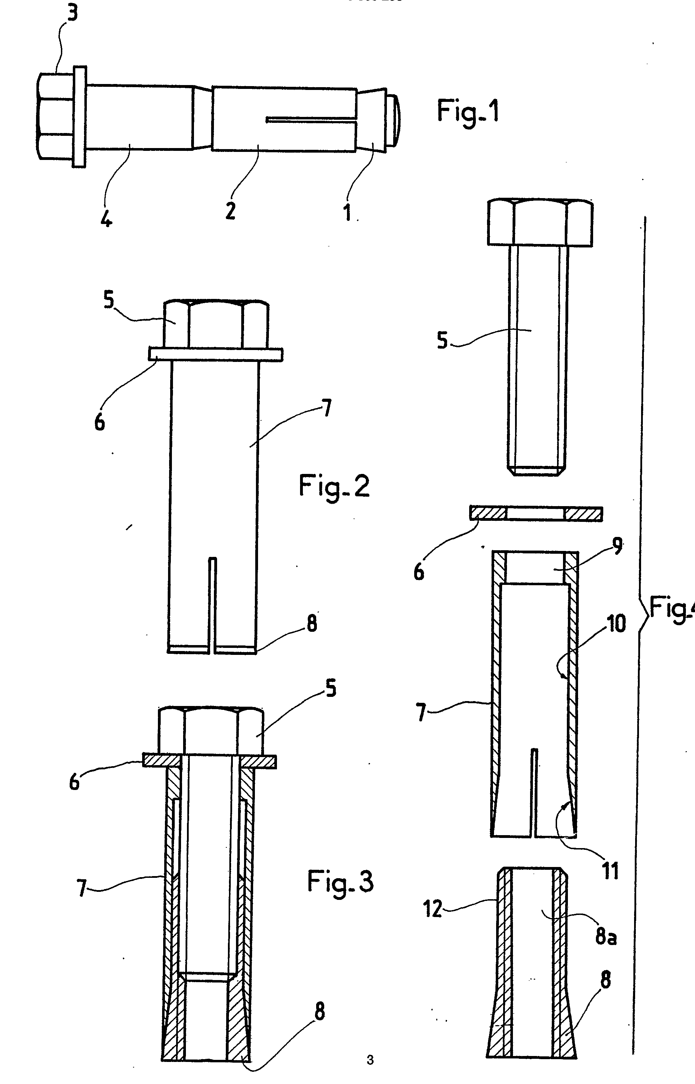

On connaît des dispositifs du genre de celui représenté par la figure 1 des dessins, comprenant un écrou conique 1 et une douille fendue 2 dont le diamètre de l'alésage est plus petit que le diamètre extérieur de l'écrou 1 de sorte que, lorsqu'on manœuvre la vis 3 dans ledit écrou 1 l'entretoise 4 rapproche la douille 2 vers l'écrou 1 qui y pénètre et en provoque l'expansion dans le trou pratiqué dans la paroi.

L'inconvénient de ce dispositif réside dans le fait qu'en cas de démontage, l'écrou 1 est repoussé à l'extérieur de la douille 2 et se place en travers du trou, empêchant le revissage du boulon 3. Il est, par ailleurs, impossible de récupérer l'écrou 1, car la douille expansible 2 reste bloquée au fond du trou lors du précédent serrage. C'est le cas de la cheville objet du brevet DE-A-2 904 988 comprenant un écrou cylindro-conique et une douille comportant d'une part une entrée conique qui épouse la partie conique de l'écrou et, d'autre part, un alésage ayant le diamètre de la partie cylindrique de l'écrou.

La cheville objet de la présente invention vise à supprimer cet inconvénient et peut être démontée et remontée sans perte de l'écrou.

Pour obtenir ce résultat la solution consiste à donner à l'écrou une longueur suffisante pour qu'il ne puisse pas sortir complètement de la douille et à supprimer l'entretoise de manière que la tête du boulon applique sa pression directement sur la douille.

A cet effet, la cheville selon le préambule de la revendication unique est caractérisée par le fait que l'écrou pénètre dans la douille par sa partie cylindrique et toute sa partie conique ce qui l'empêche d'en sortir lorsque la vis échappe son taraudage au démontage; et que la douille comporte deux alésages coaxiaux dont l'un a le diamètre de la partie cylindrique de l'écrou, tandis que l'autre a le diamètre de la vis pour supprimer le jeu.

L'invention est exposée ci-après plus en détail à l'aide des dessins sur lesquels:

La figure 2 est une vue en élévation d'une cheville à douille expansible selon l'invention.

La figure 3 en est une vue en coupe axiale.

La figure 4 montre les différents éléments constitutifs de la cheville dont il s'agit.

La cheville représentée aux dessins comprend une vis 5 à tête six pans sur laquelle est engagée une douille fendue 7 dont l'alésage 10 se prolonge, d'un côté par une entrée conique 11 et de l'autre par un plus petit alésage 9 formant un épaulement qui limite le jeu entre la vis 5 et la douille 7. Entre la douille 7 et la tête six pans de la vis 5 est intercalée une rondelle 6. La tige filetée du boulon est vissée dans un écrou cylindro-conique 8 qui pénètre dans la douille 7 sur au moins toute la longueur de sa partie cylindrique 12, ce qui l'empêche de sortir de la douille 7, même lorsque la vis 5 échappe le taraudage 8a.

## Revendication

1. Cheville à douille expansible comprenant une vis (5) à tête six pans, un écrou cylindro-conique (8) et une douille (7) comportant une entrée conique (11) qui épouse la partie conique de l'écrou et un alésage (10) ayant le diamètre de la partie cylindrique de l'écrou, caractérisée par le fait que l'écrou (8) pénètre dans la douille (7) par sa partie cylindrique (12) et toute sa partie conique ce qui l'empêche d'en sortir lorsque la vis (5) échappe son taraudage (8a) au démontage; et que la douille (7) comporte deux alésages coaxiaux (9, 10) dont l'un (10) a le diamètre de la partie cylindrique (12) de l'écrou (8), tandis que l'autre a le diamètre de la vis (5) pour supprimer le jeu.

## Claim

1. Wall plug with expandable socket comprising a hexagonal headed bolt (5), a cylindro-conical nut (8) and a socket (7) having a tapered entrance (11) which mates with the tapered part of the nut and a bore (10) having the diameter of the cylindrical part of the nut, characterized by the fact that the nut (8) penetrates into the socket (7) by its cylindrical part (12) and the whole of its tapered part which prevents it from leaving when bolt (5) escapes from its thread (8a) on disassembly, and in that the socket (7) comprises two coaxial bores (9, 10) one (10) of which has the diameter of the cylindrical part (12) of the nut (8), whereas the other has the diameter of the bolt (5) for removing play.

## Patentanspruch

Dehnbarer Hülsendübel, bestehend aus einer Sechskantschraube (5), einer konischen Ringmutter (8) und einer Hülse (7) mit konischem Ende (11), das mit dem konischen Teil der Ringmutter zusammenpasst, und einer Bohrung (10) mit dem Durchmesser des zylindrischen Teils der Ringmutter, dadurch gekennzeichnet, dass die Ringmutter (8) mit ihrem zylindrischen Teil (12) und ihrem gesamten konischen Teil in die Hülse (7) eindringt, wodurch ihr Herausfallen verhindert wird, wenn die Schraube (5) bei ihrem Ausbau aus dem Gewinde (8a) rutscht, und dass die Hülse (7) zwei koaxiale Bohrungen (9, 10) aufweist, von denen die eine (10) den Durchmesser des zylindrischen Teils (12) der Ringmutter (8) und die andere den Durchmesser der Schraube (5) hat, um Spiel zu verhindern.

Fig.1

Fig.2

Fig.3

Fig.4